# EUROPEAN PATENT APPLICATION

(11) **EP 3 975 058 A1**
(43) Date of publication of application: **30.03.2022**
(21) Application number: 21193747.9
(22) Date of filing: 30.08.2021
(51) Int. Cl.: G06N 3/04, G06N 3/08, G06N 20/00, G06T 7/00, G06N 10/40

(54) **MACHINE LEARNING NETWORK FOR SCREENING QUANTUM DEVICES**

(30) Priority: 18.09.2020 US 202063080560 P; 11.08.2021 US 202117444894
(71) Applicant: The Boeing Company, Chicago, IL 60606 (US)
(72) Inventor: MEI, Antonio Rodolph Bighetti, Chicago, 60606-1596 (US)
(74) Representative: Morrall, Jonathan Ian McLachlan

(57) **Abstract**

A method, apparatus, system, and computer program product (822) for screening quantum devices (134, 206). A computer system (216) sends features (222) extracted from an image of a quantum device into a classification neural network (144, 302). The classification neural network (144, 302) is configured to identify a set of characteristics (140, 224) for the quantum device from a group of mutually exclusive characteristics (226) based on the features (222) identified in the image of the quantum device and output the set of characteristics (140, 224) identified for the quantum device. The computer system (216) receives the set of characteristics (140, 224) identified by the classification neural network (144, 302) for the quantum devices (134, 206). The set of characteristics (140, 224) indicates whether the quantum devices (134, 206) will function as desired.

## Description

### BACKGROUND INFORMATION

### 1. Field:

The present disclosure relates generally to an improved computer system and, in particular, to a method, apparatus, system, and computer program product for screening quantum devices.

### 2. Background:

In manufacturing semiconductors, a yield is a quantitative measure of a semiconductor process. The yield is a fraction of dies on wafers that are not discarded during a manufacturing process. The goal of fabrication processes is to produce only working dies. In other words, the goal can be to have a 100 percent yield. Practically, however, the fabrication processes are imperfect. Not all dies resulting from the fabrication processes operate as desired within specifications for quantum devices on the dies.

Various factors can affect the yield of the dies from the wafers. For example, dies with nonworking quantum devices or quantum devices working out of specification can be caused by inconsistencies such as particulate contamination, lithographic misalignment, lateral dimension variation caused by etching, purity variations caused by implantation processes, purity variations caused by deposition processes, and other factors that can reduce the yield of a fabrication process.

Therefore, it would be desirable to have a method and apparatus that take into account at least some of the issues discussed above, as well as other possible issues. For example, it would be desirable to have a method and apparatus that overcome a technical problem with screening quantum devices to determine whether the quantum devices will function as desired.

### SUMMARY

An example of the present disclosure provides a device screening system comprising a computer system, a feature machine learning model system in the computer system, and a classification neural network in the computer system. The feature machine learning model system is configured to receive images of quantum devices, identify features for the quantum devices in the images, and output the features identified for the quantum devices in the images of the quantum devices. The classification neural network is configured to receive the features for the quantum devices identified in the images of the quantum devices, identify a set of characteristics for the quantum devices from a group of mutually exclusive characteristics based on the features identified in the images of the quantum devices, and output the set of characteristics identified for the quantum devices that is identified in the images of the quantum devices. The set of characteristics indicates whether the quantum devices will function as desired.

Another example of the present disclosure provides a device screening system comprising a computer system and a classification machine learning model system in the computer system. The classification machine learning model system is configured to receive features for quantum devices identified in images of the quantum devices, identify a set of characteristics for the quantum devices, and output the set of characteristics identified for the quantum devices based on the features identified in the images of the quantum devices. The set of characteristics indicates whether the quantum devices will function as desired.

Still another example of the present disclosure provides a method for screening quantum devices. A computer system sends features extracted from an image of a quantum device into a classification neural network. The classification neural network is configured to identify a set of characteristics for the quantum device from a group of mutually exclusive characteristics based on the features identified in the image of the quantum device and output the set of characteristics identified for the quantum device. The computer system receives the set of characteristics identified by the classification neural network for the quantum devices. The set of characteristics indicates whether the quantum devices will function as desired.

Another example of the present disclosure provides a computer program product for screening quantum devices, the computer program product comprising a computer-readable storage media with first program code, second program code, and third program code stored on the computer-readable storage media. The first program code is executable by a computer system to cause the computer system to receive features received in an output from a feature extraction neural network configured to receive an image of a quantum device and output the features identified in the image of the quantum device. The second program code is executable by the computer system to cause the computer system to send features extracted from the image of the quantum device into a classification neural network. The classification neural network is configured to identify a set of characteristics for the quantum devices based on the features identified in the image of the quantum device. The third program code is executable by the computer system to cause the computer system to receive the set of characteristics identified by the classification neural network for the quantum devices based on the features identified in the image of the quantum device, wherein the set of characteristics indicates whether the quantum device will function as desired.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments may be implemented;
**Figure 2** is a block diagram of an analysis environment in accordance with an illustrative embodiment;
**Figure 3** is an illustration of a block diagram of a machine learning model network in accordance with an illustrative embodiment;
**Figure 4** is an illustration of a block diagram of a neural network in accordance with an illustrative embodiment;
**Figure 5** is an illustration of a block diagram of a process for training a classification machine learning model system in accordance with an illustrative embodiment;
**Figure 6** is an illustration of a flowchart of a process for screening quantum devices in accordance with an illustrative embodiment;
**Figure 7** is an illustration of a flowchart of a process for screening quantum devices in accordance with an illustrative embodiment;
**Figure 8** is an illustration of a block diagram of a data processing system in accordance with an illustrative embodiment;
**Figure 9** is an illustration of an aircraft manufacturing and service method in accordance with an illustrative embodiment;
**Figure 10** is an illustration of a block diagram of an aircraft in which an illustrative embodiment may be implemented; and
**Figure 11** is an illustration of a block diagram of a product management system in accordance with an illustrative embodiment.

### DETAILED DESCRIPTION

The illustrative embodiments recognize and take into account one or more different considerations. For example, the illustrative embodiments recognize and take into account that lithography and etch processes are major culprits for lateral dimension variations causing quantum devices to operate in an undesired manner such as operating out of specification. For example, the lithography and etch processes can cause parametric and functional failures through inconsistencies such as gate length variation, contact overlap, or other undesired inconsistencies. The illustrative embodiments recognize and take into account that many of these inconsistencies are systematic and layout pattern dependent.

The illustrative embodiments recognize and take into account that these challenges increase as the number of quantum devices is increased. The illustrative embodiments recognize and take into account that without careful control of the lithographic or etch processes, malformed structures can lead to unexpected shorts and opens in structures such as quantum devices. The illustrative embodiments recognize and take into account that some quantum devices, such as Josephson junctions, may not include semiconductor materials. The illustrative embodiments recognize and take into account that, currently, screening for these issues occur through electrical testing performed at later stages of fabrication or after fabrication of the quantum devices has been completed. The illustrative embodiments recognize and take into account that screening for these issues earlier in the process can be performed using visual inspections performed by human operators. The illustrative embodiments recognize and take into account that these types of inspections are at least one of subjective, time-consuming, or limited to a small subset of quantum devices.

Thus, the illustrative embodiments provide a method, apparatus, system, and computer program product for identifying inconsistencies in quantum devices. Further, the illustrative embodiments can also identify the inconsistencies in processing prior to completing fabrication of the quantum devices. In the illustrative examples, this type of screening for the inconsistencies in processing can enable reworking of the quantum devices or adjusting operations in fabricating the quantum devices to reduce a number of the quantum devices that may not function as desired.

In the illustrative examples, a neural network system is employed to identify inconsistencies in a manner that is more efficient and faster than visual inspections performed by human operators. Further, images can be analyzed using a screening system during different stages of fabrication such that at least one of changing fabrication processes, reprocessing quantum devices, or other operations can be performed to increase a yield in fabricating the quantum devices on wafers.

The illustrative examples provide a method, apparatus, system, and computer program product for screening quantum devices. A computer system sends features extracted from an image of a quantum device into a classification neural network. The classification neural network is configured to identify a set of characteristics for the quantum device from a group of mutually exclusive characteristics based on the features identified in the image of the quantum device and output the set of characteristics identified for the quantum device. The computer system receives the set of characteristics identified by the classification neural network for the quantum devices. The set of characteristics indicates whether the quantum devices will function as desired.

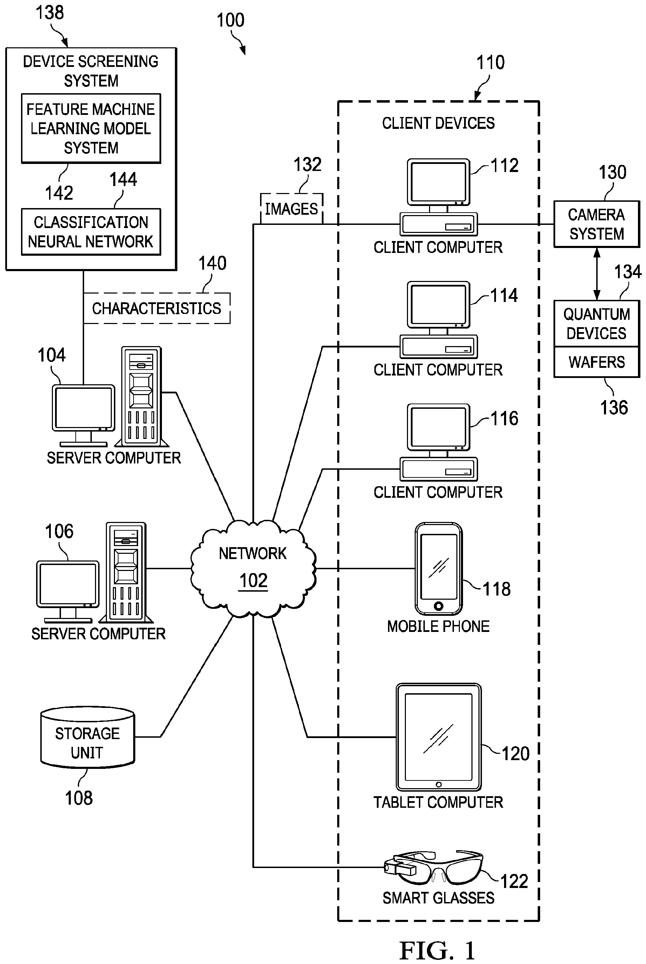

With reference now to the figures and, in particular, with reference to **Figure 1****,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** As depicted, client devices **110** include client computer **112,** client computer **114,** and client computer **116.** Client devices **110** can be, for example, computers, workstations, or network computers. In the depicted example, server computer **104** provides information, such as boot files, operating system images, and applications to client devices **110.** Further, client devices **110** can also include other types of client devices such as mobile phone **118,** tablet computer **120,** and smart glasses **122.** In this illustrative example, server computer **104,** server computer **106,** storage unit **108,** and client devices **110** are network devices that connect to network **102** in which network **102** is the communications media for these network devices. Some or all of client devices **110** may form an Internet-of-things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program code located in network data processing system **100** can be stored on a computer-recordable storage media and downloaded to a data processing system or other device for use. For example, program code can be stored on a computer-recordable storage media on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

As used herein, a "number of," when used with reference to items, means one or more items. For example, a "number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

In this illustrative example, camera system **130** is in communication with client computer **112.** As depicted, camera system **130** operates to generate images **132** of quantum devices **134.** In this illustrative example, camera system **130** can be one or more cameras. Camera system **130** can include at least one of a scanning electron microscope, a transmission electron microscope, an infrared microscope, an optical microscope, an x-ray microscope, a scanning probe microscope, a scanning tunneling microscope, a scanning transmission electron microscope, a scanning Auger microscope, a Raman microscope, a photoluminescence microscope, an atomic force microscope, a conductive atomic force microscope, a scanning capacitance microscope, a scanning thermal microscope, a magnetic force microscope, a piezo-force microscope, a near field-scanning microwave optical microscope, a kelvin probe microscope, a scanning superconducting quantum interference device (SQUID) microscope, an NV-center magnetic microscope, or some other suitable type of microscope.

As depicted, quantum devices **134** are located on wafers **136.** In this illustrative example, quantum devices **134** can be in different stages of processing on wafers **136.** For example, quantum devices **134** can include at least one of a finished quantum device, a partially-finished quantum device, or a quantum device during a phase of fabrication. In other illustrative examples, wafers **136** can be diced into dies with quantum devices **134** located on the dies.

In this illustrative example, images **132** can be analyzed by device screening system **138.** As depicted, images **132** are input into device screening system **138.** Device screening system **138** processes images **132** and outputs information in the form of characteristics **140** for quantum devices **134** determined from images **132.**

As depicted, device screening system **138** comprises feature machine learning model system **142** and classification neural network **144.** Feature machine learning model system **142** operates to identify features found in images **132** of quantum devices **134.** These features are output to classification neural network **144,** which uses these features to identify characteristics **140** of quantum devices **134.** In this illustrative example, classification neural network **144** can classify the features into classes that correspond to characteristics **140** for quantum devices **134.**

In this illustrative example, characteristics **140** can be used to make changes to the processing of quantum devices **134.** For example, if the fabrication of quantum devices **134** has not been completed, changes can be made such that quantum devices **134** can be salvaged. For example, changes to processing or reprocessing of quantum devices **134** can be performed. In some illustrative examples, changes can be made for future fabrication of quantum devices **134** such that undesired characteristics for quantum devices **134** can be avoided. For example, changes to at least one of lithography, etching times, dopant concentrations, or other changes can be made to improve characteristics **140** for quantum devices **134.**

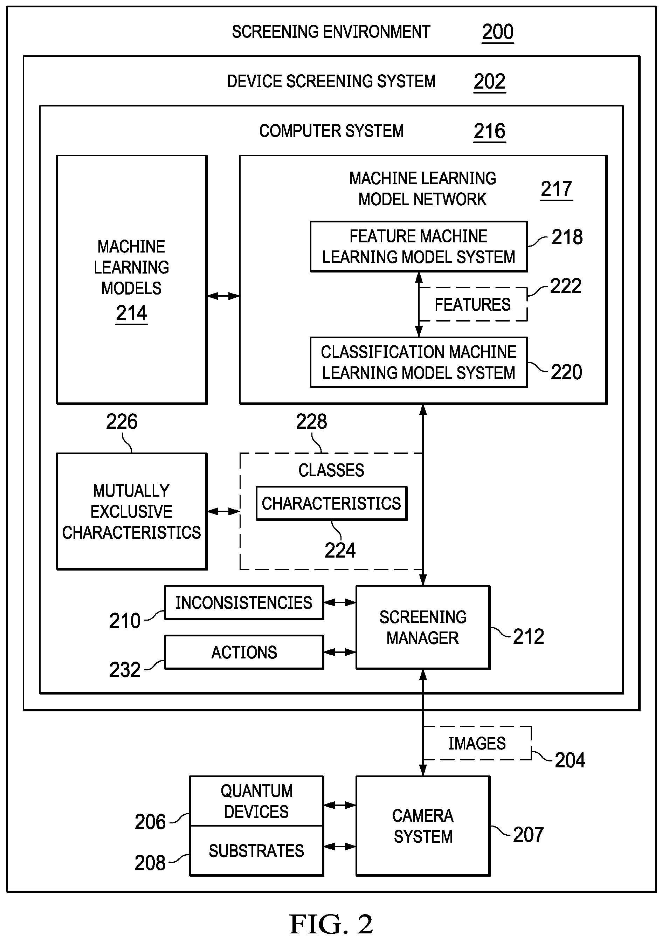

With reference now to **Figure 2****,** a block diagram of an analysis environment is depicted in accordance with an illustrative embodiment. In this illustrative example, screening environment **200** includes components that can be implemented in hardware such as the hardware shown in network data processing system **100** in **Figure 1****.**

As depicted, screening environment **200** is an environment in which device screening system **202** can analyze images **204** of quantum devices **206.** As depicted, images **204** can be generated by camera system **207.** Camera system **207** comprises one or more cameras.

In this illustrative example, quantum devices **206** are structures that are used to perform at least one of processing or storing quantum information. Although many types of quantum devices **206** are semiconductor structures, some of quantum devices **206** do not use semiconductors. Quantum devices **206** can be selected from at least one of a quantum dot device, a nanowire device, a quantum well device, a quantum information processing device, a quantum memory, a superconducting resonator, a Josephson junction, a nonlinear inductor, a linear inductor, a capacitor, an optical resonator, a diode, a transistor, a field-effect transistor, a memory device, a quantum interference device, a topological quantum device, a waveguide, an optical resonator, or some other suitable quantum device.

In this illustrative example, quantum devices **206** are located on substrates **208.** Substrates **208** can take a number of different forms. For example, substrates **208** can be selected from at least one of a semiconductor substrate, a silicon substrate, a sapphire (Al₂O₃) substrate, a silicon thermal oxide substrate, a silicon-on-insulator substrate, or other suitable substrates. In the illustrative examples, substrates **208** can take the form of wafers.

Inconsistencies **210** can occur during at least one of fabrication of quantum devices **206** or in the final structure of quantum devices **206.** Various operations performed at different stages of processing to fabricate quantum devices **206** can result in a set of inconsistencies **210** in one or more of quantum devices **206.** Inconsistencies **210** can also be present in the fabrication process that causes a quantum device to not function as expected in addition to or in place of a physical deviation in quantum devices **206.**

An inconsistency can cause a quantum device to not function correctly. The inconsistency can be in the final structure of a quantum device, a misalignment of a temporary structure used during fabrication of a quantum device, or some other type of inconsistency that can affect the function of a quantum device.

An example of a temporary structure is a resist. An inconsistency in the resist can be an incorrect exposure or development of the resist, a misalignment of the resist, an incorrect thickness for the resist, or some other undesired characteristic. A resist is a layer material that is used to transfer a pattern to a structure such as a substrate or structures for a quantum device being fabricated. A resist can be patterned by lithography such that a temporary mask is formed that protects underlying portions of the structure during subsequent processing steps. Resists used in photolithography are photoresists.

In this illustrative example, device screening system **202** can operate to analyze quantum devices **206** during different stages of processing. For example, images **204** of quantum devices **206** can be generated during a set of stages of fabricating quantum devices **206** selected from at least one of a development of a resist on a quantum device, patterning a thin film on the quantum device, or etching the quantum device.

In this illustrative, if an inconsistency is found in a resist, quantum devices **206** can be processed to re-pattern the resist. As a result, a yield of quantum device **206** on substrates **208** can be increased by alleviating potential issues occurring during different stages of processing of quantum devices **206.**

In this illustrative example, device screening system **202** comprises screening manager **212,** machine learning models **214,** and computer system **216.** Screening manager **212** and machine learning models **214** run on computer system **216.**

As depicted, screening manager **212** communicates with and can control the operation of machine learning models **214** to screen quantum devices **206.** For example, screening manager **212** can receive images **204** and input those images into machine learning models **214.** The screening can be performed during one or more stages of processing of quantum devices **206.**

At least one of screening manager **212** or machine learning models **214** can be implemented in software, hardware, firmware, or a combination thereof. When software is used, the operations performed by at least one of screening manager **212** or machine learning models **214** can be implemented in program code configured to run on hardware, such as a processor unit. When firmware is used, the operations performed by at least one of screening manager **212** or machine learning models **214** can be implemented in program code and data and stored in persistent memory to run on a processor unit. When hardware is employed, the hardware can include circuits that operate to perform the operations in at least one of screening manager **212** or machine learning models **214**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **216** is a physical hardware system and includes one or more data processing systems. When more than one data processing system is present in computer system **216,** those data processing systems are in communication with each other using a communications medium. The communications medium can be a network. The data processing systems can be selected from at least one of a computer, a server computer, a tablet computer, or some other suitable data processing system.

Examples of machine learning models that can be used to implement machine learning models **214** include at least one of a neural network, a decision tree, a support vector machine, a Bayesian network, a genetic algorithm, a cluster analysis algorithm, or some other type of machine learning model.

A machine learning model is a type of artificial intelligence model that can learn without being explicitly programmed. Machine learning models **214** can be selected from at least one of supervised machine learning models or unsupervised machine learning models. Supervised machine learning models can include at least one of a regression machine learning model or a classification machine learning model. These types of machine learning models are based on the type of training algorithms used to train machine learning models.

A machine learning model can learn based on training data input into the machine learning model. The machine learning model can learn using various types of machine learning algorithms. The machine learning algorithms include at least one of a supervised learning, an unsupervised learning, a feature learning, a sparse dictionary learning, an anomaly detection, association rules, or other types of learning algorithms.

In this illustrative example, machine learning models **214** are organized to form machine learning model network **217.** As depicted, machine learning model network **217** comprises feature machine learning model system **218** and classification machine learning model system **220.** As depicted, feature machine learning model system **218** receives images **204** of quantum devices 206. In this illustrative example, device screening system **202** can be a two-tier machine learning model system in which feature machine learning model system **218** performs feature extraction and classification machine learning model system **220** performs classification.

In this illustrative example, screening manager **212** can receive images **204.** Screening manager **212** can input images **204** into feature machine learning model system **218** for feature extraction.

As depicted, feature machine learning model system **218** can identify features **222** for quantum devices **206** in images **204.** Further, feature machine learning model system **218** can output features **222** identified for quantum devices **206** in images **204** of quantum devices **206.**

Feature machine learning model system **218** can be implemented using a number of different types of machine learning models. For example, feature machine learning model system **218** can be a convolutional neural network (CNN) that has been trained to process images to identify features in the images. In other words, the convolutional neural network can extract features.

As depicted, classification machine learning model system **220** receives features **222** for quantum devices **206** identified in images **204** of quantum devices **206.** In illustrative example, features **222** can be sent directly from feature machine learning model system **218** to classification machine learning model system **220.**

As depicted, classification machine learning model system **220** can identify a set of characteristics **224** for quantum devices **206** based on features **222** identified in images **204** of quantum devices **206** and output the set of characteristics **224** identified for quantum devices **206.**

In this illustrative example, the set of characteristics **224** indicate whether quantum devices **206** will function as desired. The set of characteristics **224** can be analyzed to determine whether one or more or all of quantum devices **206** will function as desired. In other words, the set of characteristics **224** may indicate that a first portion of quantum devices **206** will function as desired while a second portion of quantum devices **206** will not function as desired. In another example, the set of characteristics **224** may indicate that none of quantum devices **206** will function as desired. In yet another example, the set of characteristics **224** may indicate that all of quantum devices **206** will function as desired.

In the illustrative example, the set of characteristics **224** can be identified from a group of mutually exclusive characteristics **226.** As used herein, a "group of," when used with reference to items, means one or more items. For example, a "group of mutually exclusive characteristics **226"** is one or more of mutually exclusive characteristics **226.**

Mutually exclusive characteristics **226** means that characteristics cannot be present at the same time. As depicted, classification machine learning model system **220** can classify features **222** into classes **228.** In this illustrative example, classes **228** can comprise at least one of an exposure, a feature collapse, a component, an etch amount, an alignment, or some other suitable class.

Characteristics **224** in a class in classes **228** are mutually exclusive characteristics **226.** For example, a class can be an exposure for a resist. The characteristics of the exposure can be overexposed, underexposed, or correctly exposed. These characteristics are mutually exclusive because when one of these three characteristics is present, the other two characteristics cannot be present for a particular feature.

As another example, another class can be component. In this class, the characteristics can be a presence of a particle and an absence of a particle. These two characteristics for a component are mutually exclusive. Thus, classes **228** are present in which the set of characteristics **224** in a class in classes **228** are mutually exclusive.

In the illustrative example, screening manager **212** can form a set of actions **232** using characteristics **224.** In the illustrative example, characteristics **224** can be placed into or classified into classes **228.**

The set of actions **232** can take a number of forms. For example, the set of actions **232** can be selected from at least one of generating a log entry, sending an alert, performing a corrective action when an inconsistency is present, initiating reprocessing of a set of wafers, releasing a set of wafers for further processing, selecting a set of quantum devices for further analysis, or some other suitable action.

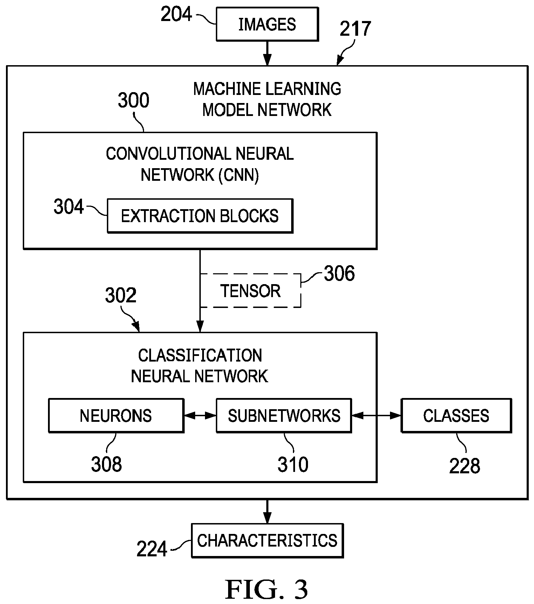

Turning next to **Figure 3****,** an illustration of a block diagram of a machine learning model network is depicted in accordance with an illustrative embodiment. In the illustrative examples, the same reference numeral may be used in more than one figure. This reuse of a reference numeral in different figures represents the same element in the different figures.

As depicted, machine learning model network **217** is an example of one manner in which machine learning models **214** in **Figure 2** can be organized to screen quantum devices **206.** In this illustrative example, machine learning model network **217** can be comprised of neural networks that form subnetworks in machine learning model network **217.**

As depicted, machine learning model network **217** comprises convolutional neural network (CNN) **300** and classification neural network **302.** In this illustrative example, convolutional neural network **300** is an example of an implementation for feature machine learning model system **218** in **Figure 2****.** Classification neural network **302** is an example of an implementation for classification machine learning model system **220** in **Figure 2****.**

In this illustrative example, convolutional neural network **300** can have an architecture selected to perform high throughput image interpretation. In other words, convolutional neural network **300** can be configured to process images for individual wafers in which each wafer can contain thousands of quantum devices to extract features **222** in **Figure 2****.** Features **222** can take various forms. For example, features **222** can be selected from at least one of an edge, a contrast difference, a brightness level, or some other suitable type of feature that convolutional neural network **300** may output.

In one illustrative example, convolutional neural network **300** can be a block structure comprising extraction blocks **304.** For example, a 14-block structure can be used in which each structure comprises operations that involve independent convolutions, batch formalization, and activation as performed by currently used convolutional neural networks that extract features from images.

In this illustrative example, each extraction block in extraction blocks **304** can double the channels and half the resolutions. In other words, each extraction block in this particular example can increase the number of channels and reduce the resolution. As a result, layers of the network can identify the features in the images in which a subsequent layer in the layers of the network identifies larger features as compared to a prior layer in the layers of the network. An output of the prior layer is input into the subsequent layer. In other implementations, the extraction blocks do not necessarily reduce channels or resolution depending on performance specifications.

During processing of images **204,** extraction blocks **304** in convolutional neural network **300** cause the information to become increasingly abstract and distributed among a growing number of channels. In this example, the last extraction block in extraction blocks **304** can output features **222** that are grouped using global pooling to form tensor **306.** Tensor **306** is an array of components and, in this example, can be a 1024-dimension group of numbers containing information about features **222** extracted from images **204.**

As a result, features **222** are represented by numbers in tensor **306** in a manner that preserves local and global structure between images. Tensor **306** forms the input into classification neural network **302.**

In this illustrative example, classification neural network **302** can be implemented using neurons **308.** Neurons **308** can be organized as a set of subnetworks **310** of neurons **308** corresponding to classes **228** in which a set of characteristics **224** in a class are mutually exclusive. In other words, each subnetwork in the set of subnetworks **310** of neurons **308** corresponds to a class in classes **228.**

Classification neural network **302** can receive features **222** for quantum devices **206** identified in images **204** of quantum devices **206** in **Figure 2** in tensor **306** output by convolutional neural network **300.** Additionally, classification neural network **302** can identify the set of characteristics **224** for quantum devices **206** from a group of mutually exclusive characteristics **226** in **Figure 2** and output the set of characteristics **224.** In this illustrative example, the set of characteristics **224** identified for the group of mutually exclusive characteristics **226** in **Figure 2** is based on features **222** identified in images **204** of quantum devices **206** in which features **222** are in information located in tensor **306.** The set of characteristics **224** indicates whether quantum devices **206** will function as desired.

In this illustrative example, classification neural network **302** can be a three-layer network. Each layer can be 1,024 neurons wide in this example. In other illustrative examples, other numbers of layers of neurons can be used depending on the implementation.

Further, classification neural network **302** can classify features **222** represented by information in tensor **306** into classes **228.** Each class in classes **228** can be mutually exclusive characteristics **226** in **Figure 2****.**

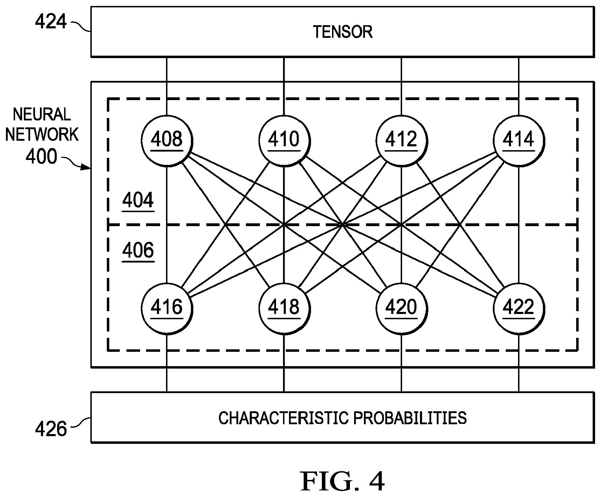

With next to **Figure 4****,** an illustration of block diagram of a neural network is depicted in accordance with an illustrative embodiment. In this illustrative example, neural network **400** is an example of a subnetwork in subnetworks **310** in classification neural network **302** in **Figure 3****.** Neural network **400** classifies features into characteristics for one class in this depicted example.

As depicted, neural network **400** has two layers, layer **404** and layer **406.** Each layer includes four neurons in this example. Layer **404** comprises neuron **408,** neuron **410,** neuron **412,** and neuron **414.** In this example, layer **406** comprises neuron **416,** neuron **418,** neuron **420,** and neuron **422.** Each neuron in layer **404** has an output connected to the neurons in layer **406.** These neurons represent a subnetwork for a class that contains four characteristics that are mutually exclusive.

As depicted, neural network **400** receives tensor **424.** In this illustrative example, tensor **424** contains features extracted by a feature machine learning model system. Each feature in tensor **424** is sent into a neuron in layer **404.** In this example, tensor **124** contains four features. In this example, characteristic probabilities **426** are output from layer **406.** In this illustrative example, each neuron in layer **406** outputs that a probability that a particular characteristic is present in the image.

In this illustrative example, four characteristics are output from layer **406** for a class in which the characteristics are mutually exclusive within the class. Neural network **400** is a simplified example of an implementation for a subnetwork in subnetworks **310** in **Figure 3** in which a small number of neurons are shown to illustrate the features in the illustrative example in a manner that avoids obscuring these features by depicting three layers with a width of 1,024 neurons that are grouped into subnetworks for classes containing characteristics. The simplified example is depicted to illustrate inputs and outputs for a neural network, such as a subnetwork, that has been trained to classify features in which probabilities for mutually exclusive characteristics are output for a class.

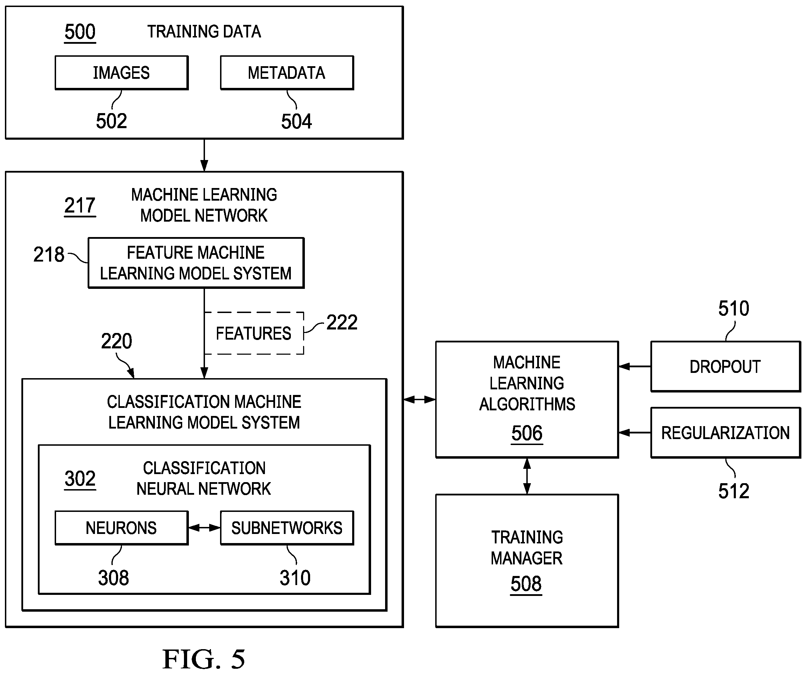

Turning now to **Figure 5****,** an illustration of a block diagram of a process for training a classification machine learning model system is depicted in accordance with an illustrative embodiment. In this illustrative example, training data **500** comprises images **502.** Images **502** can be any images of quantum devices at one or more stages of processing. In one illustrative example, images **502** can also include the quantum devices with at least one of undesired characteristics or desired characteristics for those quantum devices in images **502.** In this illustrative example, images **502** can be comprised of thousands of scanning electron microscope (SEM) images of the quantum devices.

In this illustrative example, training data **500** can also include metadata **504.** Metadata **504** can be, for example, labels indicating characteristics that should be identified in particular images. Metadata **504** can be used with a set of machine learning algorithms **506** to train classification machine learning model system **220.**

The training can be performed by training manager **508** using the set of machine learning algorithms **506.** In this illustrative example, training manager **508** runs on computer system **216** in **Figure 2****.** In the illustrative example, the set of machine learning algorithms **506** is a set of supervised machine learning algorithms. As depicted, feature machine learning model system **218** has been previously trained to extract features **222.**

In this illustrative example, when classification machine learning model system **220** is implemented using classification neural network **302,** overfitting can be reduced by training manager **508** using at least one of dropout **510** or regularization **512.**

In this illustrative example, dropout **510** involves deactivating a set of neurons **308** during training of classification neural network **302** such that overfitting is reduced. The deactivation of a neuron in this example involves disconnecting at least one of the inputs or outputs to the neuron. This deactivation can be performed randomly in the illustrative example.

As depicted, regularization **512** is a technique used to reduce the likelihood of overfitting for classification neural network **302.** Overfitting can occur when training a neural network in which the neural network predicts output values for the training data very well and with very little error and high accuracy. However, when that trained network receives new previously unseen data, the neural network generates predictions poorly.

In this illustrative example, regularization **512** can be L1 regularization in which a term can be added to an error function used by the set of machine learning algorithms **506.** This error function is configured to penalize large magnitude weight values generated during training. For example, L1 regularization can be used by training manager **508** with machine learning algorithms **506** such that a set of neurons **308** has a set of amplitudes reduced during training of classification neural network **302** such that overfitting is reduced.

After training is completed, classification neural network **302** can then be used to determine characteristics **224** in classes **228** in **Figures 2-3****.** Further, validation can be performed by training manager **508** to ensure that classification neural network **302** is performing as desired. A portion of training data **500** can be reserved for validation purposes. For example, 80 percent of training data **500** can be used for training while 20 percent of training data **500** can be used for validation purposes.

Thus, machine learning model network **217** with the two stages of feature machine learning model system **218** and classification machine learning model system **220** can more accurately identify characteristics **224** for quantum devices **206** in **Figure 2** with a desired level of speed as compared to current techniques. Further, the use of at least one of mutually exclusive characteristics **226** in **Figure 2****,** dropout **510,** or regularization **512** can increase the performance of classification machine learning model system **220.** This performance increase can include an increase in speed in addition to maintaining or increasing accuracy in determining characteristics **224** for quantum devices **206** in **Figure 2****.**

In one illustrative example, one or more technical solutions are present that overcome a technical problem with screening quantum devices to determine whether the quantum devices will function as desired. As a result, one or more technical solutions can provide a technical effect of enabling screening of the quantum devices in one or more stages of processing the quantum devices on substrates, such as wafers, in a manner that enables identifying characteristics that indicate that the quantum devices will not function as desired. These characteristics can also be referred to as failure modes in some illustrative examples.

In the illustrative example, one or more technical solutions provide a technical effect of enabling device screening such as around 1,000 quantum devices per minute to be performed in line after a stage of processing such as lithographic patterning. In the illustrative example, this technical effect can reduce the feedback learning cycle from months to hours or even shorter periods of time. Currently, months are required to identify issues when testing functions of quantum devices. This time can be reduced through performing screening during different stages of processing using machine learning model network **217** in **Figures 2-3** and **Figure 5** to identify issues such that timely rework operations can be performed thus increasing the yield of the quantum devices.

In illustrative example, machine learning model network **217** in **Figures 2-3** and **Figure 5** can automatically perform root-cause analysis to the classification of characteristics that can be used to identify issues. These issues can be the presence of particles, missing gates, missing leads, or other issues that may result in the quantum devices not functioning as desired. These types of issues can result to electrical failure such as a short or an open that currently are not identified until electrical testing completed devices.

Computer system **216** in **Figure 2** can be configured to perform at least one of the steps, operations, or actions described in the different illustrative examples using software, hardware, firmware or a combination thereof. As a result, computer system **216** operates as a special purpose computer system in which machine learning model network **217** in computer system **216** enables screening of quantum devices **206** to identify characteristics **224** in a manner that enables identifying issues or situations in which quantum devices **206** may not function as desired.

In particular, machine learning model network **217** transforms computer system **216** into a special purpose computer system as compared to currently available general computer systems that do not have machine learning model network **217.** In the illustrative example, the use of machine learning model network **217** in computer system **216** provides a practical application for screening quantum devices **206** during fabrication of quantum devices **206** in a manner that increases the performance of computer system **216** in screening of quantum devices **206** from images **204** of quantum devices **206.** In other words, machine learning model network **217** in computer system **216** is directed to a practical application of processes integrated into machine learning model network **217** in computer system **216** that includes sending features **222** extracted from an image of a quantum device into classification neural network **302.** A set of characteristics **224** identified by classification neural network **302** for quantum devices **206** is received. The set of characteristics **224** indicates whether the quantum device will function as desired. The use of machine learning model network **217** in computer system **216** can improve at least one of the speed or accuracy at which computer system **216** can at least one of identify characteristics **224,** perform a set of actions **232,** or perform other operations with respect to the analyzing of images **204** to obtain characteristics **224** that can be used to improve the yield of quantum devices **206.** In this manner, at least one of screening manager **212** or machine learning model network **217** in computer system **216** provides a practical application of analyzing images **204** for use in screening of quantum devices **206** such that the functioning of computer system **216** is improved.

The illustration of screening environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, device screening system **202** can be applied to analyze images of other types of structures other than quantum devices. For example, device screening system **202** can be used to screen semiconductor structures such as transistors, field-effect transistors, capacitors, diodes, or other types of semiconductor structures.

As another example, features **222** can be sent indirectly to classification machine learning model system **220.** For example, features **222** can be output from feature machine learning model system **218** to screening manager **212.** Screening manager **212** can then send features **222** to classification machine learning model system **220.**

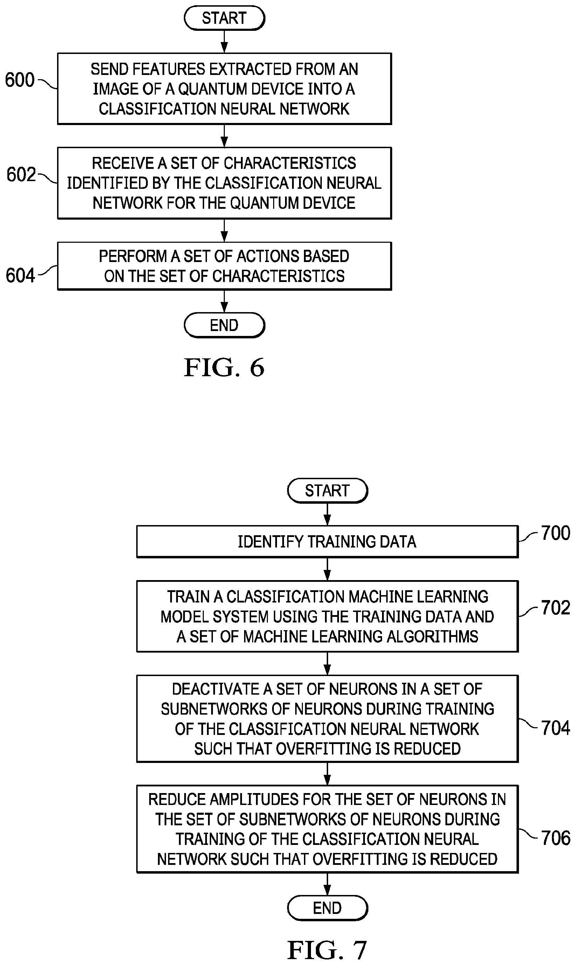

Turning next to **Figure 6****,** an illustration of a flowchart of a process for screening quantum devices is depicted in accordance with an illustrative embodiment. The process in **Figure 6** can be implemented in hardware, software, or both. When implemented in software, the process can take the form of program code that is run by one or more processor units located in one or more hardware devices in one or more computer systems. For example, the process can be implemented in screening manager **212** in computer system **216** in **Figure 2****.**

The process begins by sending features extracted from an image of a quantum device into a classification neural network (operation **600).** In operation **600,** the classification neural network is configured to identify a set of characteristics for the quantum device from a group of mutually exclusive characteristics based on the features identified in the image of the quantum device and output the set of characteristics identified for the quantum device.

The process receives a set of characteristics identified by the classification neural network for the quantum device (operation **602).** The set of characteristics indicates whether the quantum device will function as desired.

The process performs a set of actions based on the set of characteristics (operation **604).** The process terminates thereafter. The set of actions can be selected from at least one of releasing a wafer for further processing, generating a log entry, sending an alert, performing a corrective action when an inconsistency is present, initiating rework of a set of wafers, or some other suitable action. As another example, the set of actions can include modifying a process for fabricating the quantum device based on the set of characteristics identified by the classification neural network.

Turning next to **Figure 7****,** an illustration of a flowchart of a process for screening quantum devices is depicted in accordance with an illustrative embodiment. The process in **Figure 7** can be implemented in hardware, software, or both. When implemented in software, the process can take the form of program code that is run by one or more processor units located in one or more hardware devices in one or more computer systems. For example, the process can be implemented in training manager **508** in **Figure 5****.**

The process begins by identifying training data (operation **700).** This training data can be images for quantum devices, semiconductor devices, or other devices or structures for which training is being performed.

The process trains a classification machine learning model system using the training data and a set of machine learning algorithms (operation **702).** In operation **702,** the training data can be sent into a feature machine learning model system that has been previously trained in which the feature machine learning model system outputs features that are sent into the classification neural network.

The process deactivates a set of neurons in a set of subnetworks of neurons during training of the classification neural network such that overfitting is reduced (operation **704).** The process reduces amplitudes for the set of neurons in the set of subnetworks of neurons during training of the classification neural network such that overfitting is reduced (operation **706).** The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

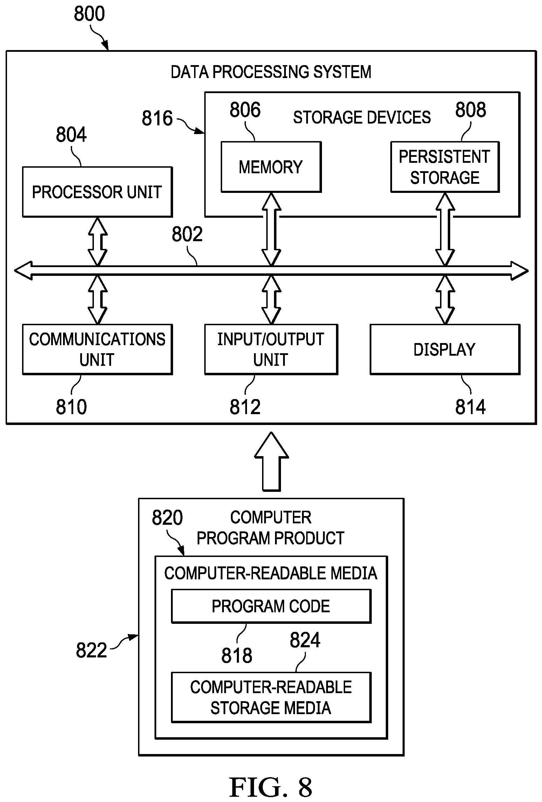

Turning now to **Figure 8****,** an illustration of a block diagram of a data processing system is depicted in accordance with an illustrative embodiment. Data processing system **800** can be used to implement server computer **104,** server computer **106,** and client devices **110** in **Figure 1****.** Data processing system **800** can also be used to implement computer system **216** in **Figure 2****.** In this illustrative example, data processing system **800** includes communications framework **802,** which provides communications between processor unit **804,** memory **806,** persistent storage **808,** communications unit **810,** input/output (I/O) unit **812,** and display **814.** In this example, communications framework **802** takes the form of a bus system.

Processor unit **804** serves to execute instructions for software that can be loaded into memory **806.** Processor unit **804** includes one or more processors. For example, processor unit **804** can be selected from at least one of a multicore processor, a central processing unit (CPU), a graphics processing unit (GPU), a physics processing unit (PPU), a digital signal processor (DSP), a network processor, or some other suitable type of processor. Further, processor unit **804** can may be implemented using one or more heterogeneous processor systems in which a main processor is present with secondary processors on a single chip. As another illustrative example, processor unit **804** can be a symmetric multi-processor system containing multiple processors of the same type on a single chip.

Memory **806** and persistent storage **808** are examples of storage devices **816.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **816** may also be referred to as computer-readable storage devices in these illustrative examples. Memory **806,** in these examples, can be, for example, a random-access memory or any other suitable volatile or nonvolatile storage device. Persistent storage **808** can take various forms, depending on the particular implementation.

For example, persistent storage **808** may contain one or more components or devices. For example, persistent storage **808** can be a hard drive, a solid-state drive (SSD), a flash memory, a rewritable optical disk, a rewritable magnetic tape, or some combination of the above. The media used by persistent storage **808** also can be removable. For example, a removable hard drive can be used for persistent storage **808.**

Communications unit **810,** in these illustrative examples, provides for communications with other data processing systems or devices. In these illustrative examples, communications unit **810** is a network interface card.

Input/output unit **812** allows for input and output of data with other devices that can be connected to data processing system **800.** For example, input/output unit **812** can provide a connection for user input through at least one of a keyboard, a mouse, or some other suitable input device. Further, input/output unit **812** can send output to a printer. Display **814** provides a mechanism to display information to a user.

Instructions for at least one of the operating system, applications, or programs can be located in storage devices **816,** which are in communication with processor unit **804** through communications framework **802.** The processes of the different embodiments can be performed by processor unit **804** using computer-implemented instructions, which can be located in a memory, such as memory **806.**

These instructions are referred to as program code, computer usable program code, or computer-readable program code that can be read and executed by a processor in processor unit **804.** The program code in the different embodiments can be embodied on different physical or computer-readable storage media, such as memory **806** or persistent storage **808.**

Program code **818** is located in a functional form on computer-readable media **820** that is selectively removable and can be loaded onto or transferred to data processing system **800** for execution by processor unit **804.** Program code **818** and computer-readable media **820** form computer program product **822** in these illustrative examples. In the illustrative example, computer-readable media **820** is computer-readable storage media **824.**

In these illustrative examples, computer-readable storage media **824** is a physical or tangible storage device used to store program code **818** rather than a media that propagates or transmits program code **818.** Computer-readable storage media **824,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **818** can be transferred to data processing system **800** using a computer-readable signal media. The computer-readable signal media can be, for example, a propagated data signal containing program code **818.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **820"** can be singular or plural. For example, program code **818** can be located in computer-readable media **820** in the form of a single storage device or system. In another example, program code **818** can be located in computer-readable media **820** that is distributed in multiple data processing systems. In other words, some instructions in program code **818** can be located in one data processing system while other instructions in program code **818** can be located in one data processing system. For example, a portion of program code **818** can be located in computer-readable media **820** in a server computer while another portion of program code **818** can be located in computer-readable media **820** located in a set of client computers.

The different components illustrated for data processing system **800** are not meant to provide architectural limitations to the manner in which different embodiments can be implemented. In some illustrative examples, one or more of the components may be incorporated in or otherwise form a portion of, another component. For example, memory **806,** or portions thereof, can be incorporated in processor unit **804** in some illustrative examples. The different illustrative embodiments can be implemented in a data processing system including components in addition to or in place of those illustrated for data processing system **800.** Other components shown in **Figure 8** can be varied from the illustrative examples shown. The different embodiments can be implemented using any hardware device or system capable of running program code **818.**

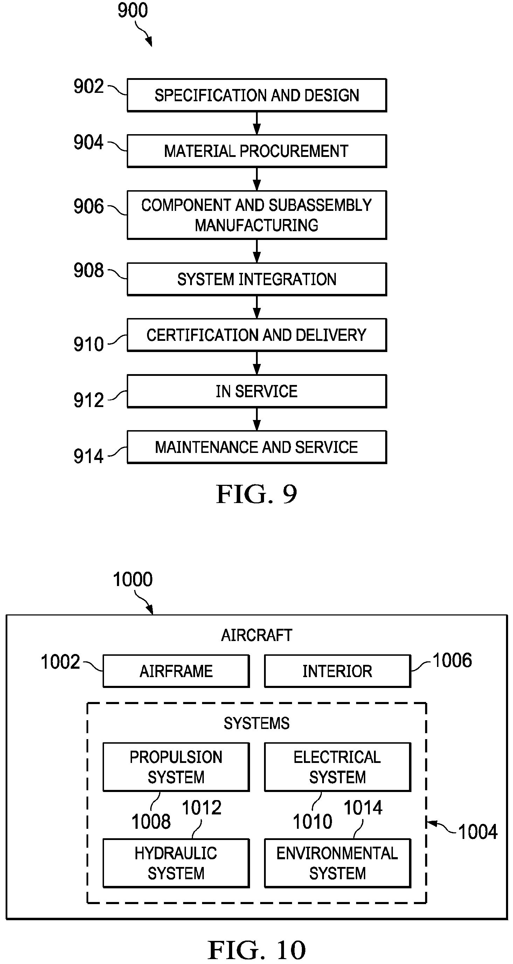

Illustrative embodiments of the disclosure may be described in the context of aircraft manufacturing and service method **900** as shown in **Figure 9** and aircraft **1000** as shown in **Figure 10****.** Turning first to **Figure 9****,** an illustration of an aircraft manufacturing and service method is depicted in accordance with an illustrative embodiment. During pre-production, aircraft manufacturing and service method **900** may include specification and design **902** of aircraft **1000** in **Figure 10** and material procurement **904.**

During production, component and subassembly manufacturing **906** and system integration **908** of aircraft **1000** in **Figure 10** takes place. In the illustrative example, component and subassembly manufacturing **906** can include fabricating quantum devices. Thereafter, aircraft **1000** in **Figure 10** can go through certification and delivery **910** in order to be placed in service **912.** While in service **912** by a customer, aircraft **1000** in **Figure 10** is scheduled for routine maintenance and service **914,** which may include modification, reconfiguration, refurbishment, and other maintenance or service.

Each of the processes of aircraft manufacturing and service method **900** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 10****,** an illustration of an aircraft is depicted in which an illustrative embodiment may be implemented. In this example, aircraft **1000** is produced by aircraft manufacturing and service method **900** in **Figure 9** and may include airframe **1002** with plurality of systems **1004** and interior **1006.** Examples of systems **1004** include one or more of propulsion system **1008,** electrical system **1010,** hydraulic system **1012,** and environmental system **1014.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **900** in **Figure 9****.**

In one illustrative example, components or subassemblies produced in component and subassembly manufacturing **906** in **Figure 9** can be fabricated or manufactured in a manner similar to components or subassemblies produced while aircraft **1000** is in service **912** in **Figure 9****.** As yet another example, one or more apparatus embodiments, method embodiments, or a combination thereof can be utilized during production stages, such as component and subassembly manufacturing **906** and system integration **908** in **Figure 9****.** One or more apparatus embodiments, method embodiments, or a combination thereof may be utilized while aircraft **1000** is in service **912,** during maintenance and service **914** in **Figure 9****,** or both. The use of a number of the different illustrative embodiments may substantially expedite the assembly of aircraft **1000,** reduce the cost of aircraft **1000,** or both expedite the assembly of aircraft **1000** and reduce the cost of aircraft **1000.** For example, the fabrication of quantum devices can be performed in a manner that increases the yield of the quantum devices on wafers when using a screening system such as depicted in one or more illustrative examples. Changes to the process for rework can be performed in a manner that salvages or reduces the rejection of quantum devices formed through processing the quantum devices on the wafers.

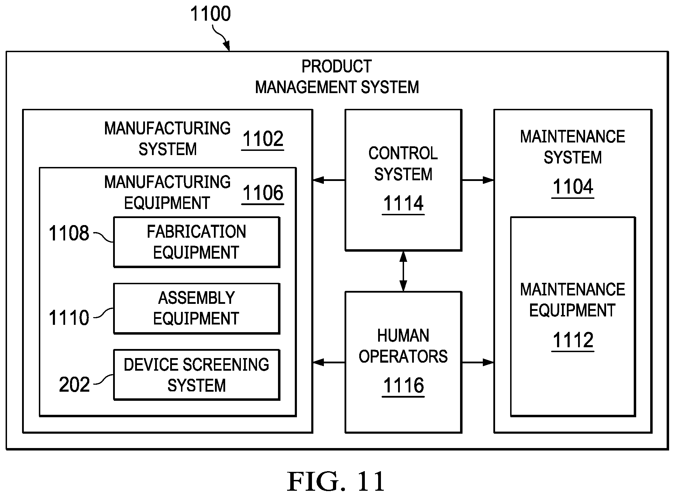

Turning now to **Figure 11****,** an illustration of a block diagram of a product management system is depicted in accordance with an illustrative embodiment. Product management system **1100** is a physical hardware system. In this illustrative example, product management system **1100** includes at least one of manufacturing system **1102** or maintenance system **1104.**

Manufacturing system **1102** is configured to manufacture products, such as aircraft **1000** in **Figure 10****.** As depicted, manufacturing system **1102** includes manufacturing equipment **1106.** Manufacturing equipment **1106** includes at least one of fabrication equipment **1108** or assembly equipment **1110.**

Fabrication equipment **1108** is equipment that is used to fabricate components for parts used to form aircraft **1000** in **Figure 10****.** For example, fabrication equipment **1108** can include machines and tools. These machines and tools can be at least one of a drill, a hydraulic press, a furnace, a mold, a composite tape laying machine, a vacuum system, a lathe, or other suitable types of equipment. Fabrication equipment **1108** can be used to fabricate at least one of metal parts, composite parts, semiconductors, circuits, fasteners, ribs, skin panels, spars, antennas, or other suitable types of parts.

With respect to fabricating semiconductor components, fabrication equipment **1108** can comprise at least one of an epitaxial reactor, an oxidation system, a diffusion system, an etching machine, a cleaning machine, a bonding machine, a dicing machine, a wafer saw, an ion implantation machine, a physical vapor deposition system, a chemical vapor deposition system, a photolithography system, an electron-beam lithography system, a plasma etcher, a die attachment machine, a wire bonder, a die overcoat system, molding equipment, a hermetic sealer, an electrical tester, a burn-in oven, a retention bake oven, a UV erase machine, or other suitable types of equipment that can be used to manufacture quantum devices.

Assembly equipment **1110** is equipment used to assemble parts to form aircraft **1000** in **Figure 10****.** In particular, assembly equipment **1110** is used to assemble components and parts to form aircraft **1000** in **Figure 10****.** Assembly equipment **1110** also can include machines and tools. These machines and tools may be at least one of a robotic arm, a crawler, a fastener installation system, a rail-based drilling system, or a robot. Assembly equipment **1110** can be used to assemble parts such as seats, horizontal stabilizers, wings, engines, engine housings, landing gear systems, and other parts for aircraft **1000** in **Figure 10****.**

In this illustrative example, maintenance system **1104** includes maintenance equipment **1112.** Maintenance equipment **1112** can include any equipment needed to perform maintenance on aircraft **1000** in **Figure 10****.** Maintenance equipment **1112** may include tools for performing different operations on parts on aircraft **1000** in **Figure 10****.** These operations can include at least one of disassembling parts, refurbishing parts, inspecting parts, reworking parts, manufacturing replacement parts, or other operations for performing maintenance on aircraft **1000** in **Figure 10****.** These operations can be for routine maintenance, inspections, upgrades, refurbishment, or other types of maintenance operations.

In the illustrative example, maintenance equipment **1112** may include ultrasonic inspection devices, x-ray imaging systems, vision systems, drills, crawlers, and other suitable devices. In some cases, maintenance equipment **1112** can include fabrication equipment **1108,** assembly equipment **1110,** or both to produce and assemble parts that are needed for maintenance.

Product management system **1100** also includes control system **1114.** Control system **1114** is a hardware system and may also include software or other types of components. Control system **1114** is configured to control the operation of at least one of manufacturing system **1102** or maintenance system **1104.** In particular, control system **1114** can control the operation of at least one of fabrication equipment **1108,** assembly equipment **1110,** or maintenance equipment **1112.**

The hardware in control system **1114** can be implemented using hardware that may include computers, circuits, networks, and other types of equipment. The control may take the form of direct control of manufacturing equipment **1106.** For example, robots, computer-controlled machines, and other equipment can be controlled by control system **1114.** In other illustrative examples, control system **1114** can manage operations performed by human operators **1116** in manufacturing or performing maintenance on aircraft **1000** in **Figure 10****.** For example, control system **1114** can assign tasks, provide instructions, display models, or perform other operations to manage operations performed by human operators **1116.** In these illustrative examples, device screening system **202** can be implemented in product management system **1100.** For example, device screening system **202** can be a part of manufacturing equipment **1106** used for screening and determining yields for quantum devices. In this illustrative example, device screening system **202** can be in communication with control system **1114** in a manner that enables control system **1114** to manage at least one of the manufacturing or maintenance of aircraft **1000** in **Figure 10****.** For example, images can be generated after at least one of photoresist development on quantum devices, etching quantum devices, or after other stages in fabricating quantum devices. In one illustrative example, images of the photoresist after development can enable correcting issues in the lithography. Imaging after etching the quantum devices enables screening of the semiconductors for undesired characteristics.

In the different illustrative examples, human operators **1116** can operate or interact with at least one of manufacturing equipment **1106,** maintenance equipment **1112,** or control system **1114.** This interaction can occur to manufacture aircraft **1000** in **Figure 10****.**

Of course, product management system **1100** may be configured to manage other products other than aircraft **1000** in **Figure 10****.** Although product management system **1100** has been described with respect to manufacturing in the aerospace industry, product management system **1100** can be configured to manage products for other industries. For example, product management system **1100** can be configured to manufacture products for the automotive industry as well as any other suitable industries.

Thus, the illustrative embodiments provide a method, apparatus, system, and computer program product for identifying characteristics that may cause quantum devices to perform in an undesired manner. For example, the characteristics may indicate situations when a semiconductor structure does not have the intended or desired functionality. In one illustrative example, a computer system sends features extracted from an image of a quantum device into a classification neural network. The classification neural network is configured to identify a set of characteristics for the quantum device from a group of mutually exclusive characteristics based on the features identified in the image of the quantum device and output the set of characteristics identified for the quantum device. The computer system receives the set of characteristics identified by classification neural network for the quantum devices. The set of characteristics indicates whether the quantum devices will function as desired.

In one illustrative example, screening of quantum devices in one or more stages of processing the quantum devices enables identifying characteristics that indicate that the quantum devices will not function as desired. In the illustrative example, reduction in screening time can occur through performing screening of the quantum devices during different stages of processing using a machine learning model network to identify issues such that timely rework operations can be performed, thus increasing a yield of the quantum devices. In illustrative example, the machine learning model network can automatically perform root-cause analysis to the classification of characteristics that can be used to identify issues. These issues can be the presence of particles, missing gates, missing leads, or other issues that may result in the quantum devices not functioning as desired. These types of issues can result in electrical failure such as a short or open that currently is not identified until electrical testing is performed on quantum devices.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Further, the disclosure comprises examples according to the following clauses:
Clause 1. A device screening system comprising:
   a computer system;
   a feature machine learning model system in the computer system, wherein the feature machine learning model system is configured to receive images of quantum devices, identify features for the quantum devices in the images, and output the features identified for the quantum devices in the images of the quantum devices; and
   a classification neural network in the computer system, wherein the classification neural network is configured to receive the features for the quantum devices identified in the images of the quantum devices, identify a set of characteristics for the quantum devices from a group of mutually exclusive characteristics based on the features identified in the images of the quantum devices, and output the set of characteristics identified for the quantum devices that are identified in the images of the quantum devices, wherein the set of characteristics indicates whether the quantum devices will function as desired.
Clause 2. The device screening system of Clause 1, wherein the classification neural network comprises a set of subnetworks of neurons corresponding to classes in which the set of characteristics in a class in the classes is mutually exclusive.
Clause 3. The device screening system of Clause 2, wherein the classes comprise at least one of an exposure, a feature collapse, a component, an etch amount, or an alignment.
Clause 4. The device screening system of Clause 2 or 3, wherein a set of neurons in the subnetworks of neurons is deactivated during training of the classification neural network such that overfitting is reduced.
Clause 5. The device screening system of Clause 2, 3 or 4, wherein a set of neurons in the subnetworks of neurons have a set of amplitudes reduced during training of the classification neural network such that overfitting is reduced.
Clause 6. The device screening system of any preceding clause, wherein the feature machine learning model system is a convolutional neural network trained to extract features for quantum devices.
Clause 7. The device screening system of Clause 6, wherein the convolutional neural network comprises:
   layers of neurons that identify the features in the images, wherein a subsequent layer in the layers of neurons identifies larger features as compared to a prior layer in the layers of neurons, and wherein an output of the prior layer is input into the subsequent layer.
Clause 8. The device screening system of Clause 7, wherein each layer in the layers of neurons increases a number of channels and reduces a resolution of an image.
Clause 9. The device screening system of any preceding clause, wherein the quantum devices are selected from one of a quantum dot device, a nanowire device, a quantum well device, a quantum information processing device, a quantum memory, a superconducting resonator, a Josephson junction, a nonlinear inductor, a linear inductor, a capacitor, an optical resonator, a diode, a transistor, a field-effect transistor, a memory device, a quantum interference device, a topological quantum device, a waveguide, or an optical resonator.
Clause 10. The device screening system of any preceding clause, wherein the images of the quantum devices are generated during a set of stages of fabricating the quantum devices selected from at least one of a development of a resist on a quantum device, patterning a thin film on the quantum device, or etching the quantum device.
Clause 11. A device screening system comprising:
   a computer system; and
   a classification machine learning model system in the computer system, wherein the classification machine learning model system is configured to receive features for quantum devices identified in images of the quantum devices, identify a set of characteristics for the quantum devices, and output the set of characteristics identified for the quantum devices based on the features identified in the images of the quantum devices, wherein the set of characteristics indicates whether the quantum devices will function as desired.
Clause 12. The device screening system of Clause 11, wherein the classification machine learning model system is a classification neural network configured to identify the set of characteristics for the quantum devices from a group of mutually exclusive characteristics.
Clause 13. The device screening system of any of clauses 11-12, wherein in identifying the set of characteristics for the quantum devices, the classification machine learning model system is configured to identify the set of characteristics for the quantum devices from a group of mutually exclusive characteristics.
Clause 14. The device screening system of any of clauses 11-13, wherein the classification machine learning model system is selected from at least one of a neural network, a decision tree, a support vector machine, a Bayesian network, a genetic algorithm, or a cluster analysis algorithm.
Clause 15. The device screening system of any of Clauses 12-14, wherein the classification neural network comprises subnetworks of neurons corresponding to classes in which the set of characteristics in a class in the classes is mutually exclusive.
Clause 16. The device screening system of Clause 15, wherein the classes comprise at least one of an exposure, a feature collapse, a component, an etch amount, or an alignment.
Clause 17. The device screening system of Clause 15 or 16, wherein a set of neurons in the subnetworks of neurons is deactivated during training of the classification neural network such that overfitting is reduced.
Clause 18. The device screening system of Clause 15, 16 or 17 wherein a set of neurons in the subnetworks of neurons have a set of amplitudes reduced during training of the classification neural network such that overfitting is reduced.
Clause 19. The device screening system of any of clauses 11-18, wherein the features are received in an output from a feature extraction neural network configured to receive the images of the quantum devices, identify the features for the quantum devices in the images, and output the features identified for the quantum devices in the images of the quantum devices.
Clause 20. The device screening system of any of clauses 11-19, wherein the quantum devices are selected from one of a quantum dot device, a nanowire device, a quantum well device, a quantum information processing device, a quantum memory, a superconducting resonator, a Josephson junction, a nonlinear inductor, a linear inductor, a capacitor, an optical resonator, a diode, a transistor, a field-effect transistor, a memory device, a quantum interference device, a topological quantum device, a waveguide, or an optical resonator.
Clause 21. A method for screening quantum devices, the method comprising:
   sending, by a computer system, features extracted from an image of a quantum device into a classification neural network, wherein the classification neural network is configured to identify a set of characteristics for the quantum device from a group of mutually exclusive characteristics based on the features identified in the image of the quantum device and output the set of characteristics identified for the quantum device; and
   receiving, by the computer system, the set of characteristics identified by classification neural network for the quantum device, wherein the set of characteristics indicates whether the quantum device will function as desired.
Clause 22. The method of Clause 21 further comprising:
   modifying a process for fabricating the quantum device based on the set of characteristics identified by the classification neural network.
Clause 23. The method of Clause 21 or 22, wherein the classification neural network comprises a set of subnetworks of neurons corresponding to classes in which the set of characteristics in a class is mutually exclusive.
Clause 24. The method of Clause 23, wherein the classes comprise at least one of an exposure, a feature collapse, a component, an etch amount, or an alignment.
Clause 25. The method of Clause 23 or 24 further comprising:
   deactivating a set of neurons in the set of subnetworks of neurons during training of the classification neural network such that overfitting is reduced.
Clause 26. The method of Clause 23, 24 or 25 further comprising:
   reducing amplitudes for a set of neurons in the set of subnetworks of neurons during training of the classification neural network such that overfitting is reduced.
Clause 27. The method of any of Clauses 21 to 26 further comprising:
   receiving the features received in an output from a feature extraction neural network configured to receive the image of the quantum device and output the features identified for the quantum device in the image of the quantum device.
Clause 28. The method of any of Clauses 21 to 26, wherein the image of the quantum device is generated during a stage of fabricating the quantum device selected from an exposure of a photoresist on the quantum device, patterning a thin film on the quantum device, and etching the quantum device.
Clause 29. A computer program product for screening quantum devices, the computer program product comprising:
   a computer-readable storage media; first program code, stored on the computer-readable storage media, executable by a computer system to cause the computer system to receive features received in an output from a feature extraction neural network configured to receive an image of a quantum device and output the features identified in the image of the quantum device;
      second program code, stored on the computer-readable storage media, executable by the computer system to cause the computer system to send features extracted from an image of a quantum device into a classification neural network, wherein the classification neural network is configured to identify a set of characteristics for the quantum devices based on the features identified in the image of the quantum device; and
   third program code, stored on the computer-readable storage media, executable by the computer system to cause the computer system to receive the set of characteristics identified by the classification neural network for the quantum devices based on the features identified in the image of the quantum device,
   wherein the set of characteristics indicates whether the quantum device will function as desired.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A device screening system (202) comprising:
a computer system (216); and
a classification machine learning model system (220) in the computer system (216), wherein the classification machine learning model system (220) is configured to receive features (222) for quantum devices (134, 206) identified in images (132, 204, 502) of the quantum devices (134, 206), identify a set of characteristics (140, 224) for the quantum devices (134, 206), and output the set of characteristics (140, 224) identified for the quantum devices (134, 206) based on the features (222) identified in the images (132, 204, 502) of the quantum devices (134, 206), wherein the set of characteristics (140, 224) indicates whether the quantum devices (134, 206) will function as desired.

2. The device screening system (202) of claim 1, wherein the classification machine learning model system (220) is a classification neural network (144, 302) configured to identify the set of characteristics (140, 224) for the quantum devices (134, 206) from a group of mutually exclusive characteristics (226), and/or optionally
wherein in identifying the set of characteristics (140, 224) for the quantum devices (134, 206), the classification machine learning model system (220) is configured to identify the set of characteristics (140, 224) for the quantum devices (134, 206) from a group of mutually exclusive characteristics (226), and/or optionally
wherein the classification machine learning model system (220) is selected from at least one of a neural network, a decision tree, a support vector machine, a Bayesian network, a genetic algorithm, or a cluster analysis algorithm.

3. The device screening system (202) of claim 2, wherein the classification neural network (144, 302) comprises subnetworks (310) of neurons (308) corresponding to classes (228) in which the set of characteristics (140, 224) in a class in the classes (228) is mutually exclusive.

4. The device screening system (202) of claim 3, wherein the classes (228) comprise at least one of an exposure, a feature collapse, a component, an etch amount, or an alignment.

5. The device screening system (202) of claim 3, wherein a set of neurons (308) in the subnetworks (310) of neurons (308) is deactivated during training of the classification neural network (144, 302) such that overfitting is reduced.

6. The device screening system (202) of claim 3, wherein a set of neurons (308) in the subnetworks (310) of neurons (308) have a set of amplitudes reduced during training of the classification neural network (144, 302) such that overfitting is reduced.

7. The device screening system (202) of any preceding claim, wherein the features (222) are received in an output from a feature extraction neural network configured to receive the images (132, 204, 502) of the quantum devices (134, 206), identify the features (222) for the quantum devices (134, 206) in the images(132, 204, 502), and output the features (222) identified for the quantum devices (134, 206) in the images (132, 204, 502) of the quantum devices (134, 206, and/or optionally
wherein the quantum devices (134, 206) are selected from one of a quantum dot device, a nanowire device, a quantum well device, a quantum information processing device, a quantum memory, a superconducting resonator, a Josephson junction, a nonlinear inductor, a linear inductor, a capacitor, an optical resonator, a diode, a transistor, a field-effect transistor, a memory device, a quantum interference device, a topological quantum device, a waveguide, or an optical resonator.

8. A method for screening quantum devices (134, 206), the method comprising:
sending (600), by a computer system (216), features (222) extracted from an image of a quantum device into a classification neural network (144, 302), wherein the classification neural network (144, 302) is configured to identify a set of characteristics (140, 224) for the quantum device from a group of mutually exclusive characteristics (226) based on the features (222) identified in the image of the quantum device and output the set of characteristics (140, 224) identified for the quantum device; and
receiving (602), by the computer system (216), the set of characteristics (140, 224) identified by classification neural network (144, 302) for the quantum device, wherein the set of characteristics (140, 224) indicates whether the quantum device will function as desired.

9. The method of claim 8 further comprising:
modifying a process for fabricating the quantum device based on the set of characteristics (140, 224) identified by the classification neural network (144, 302).

10. The method of any of claims 8-9, wherein the classification neural network (144, 302) comprises a set of subnetworks (310) of neurons (308) corresponding to classes (228) in which the set of characteristics (140, 224) in a class is mutually exclusive.

11. The method of claim 10, wherein the classes (228) comprise at least one of an exposure, a feature collapse, a component, an etch amount, or an alignment.

12. The method of claim 10 further comprising:
deactivating (704) a set of neurons (308) in the set of subnetworks (310) of neurons (308) during training of the classification neural network (144, 302) such that overfitting is reduced; and/or optionally
reducing (706) amplitudes for a set of neurons (308) in the set of subnetworks (310) of neurons (308) during training of the classification neural network (144, 302) such that overfitting is reduced.

13. The method of claim 8 further comprising:
receiving the features (222) received in an output from a feature extraction neural network configured to receive the image of the quantum device and output the features (222) identified for the quantum device in the image of the quantum device.

14. The method of claim 8, wherein the image of the quantum device is generated during a stage of fabricating the quantum device selected from an exposure of a photoresist on the quantum device, patterning a thin film on the quantum device, and etching the quantum device.

15. A computer program product (822) for screening quantum devices (134, 206), the computer program product (822) comprising:
a computer-readable storage media (822);
program code, stored on the computer-readable storage media (824), executable by a computer system (216) to cause the computer system (216) to perform the method of any of Claims 8-14.
